# EUROPÄISCHE PATENTANMELDUNG

(11) **EP 0 622 940 A1**
(43) Veröffentlichungstag der Anmeldung: **02.11.1994**
(21) Anmeldenummer: 93106917.3
(22) Anmeldetag: 28.04.1993
(51) Int. Cl.: H04M 11/06, H04L 5/14

(54) **Verfahren zum Einstellen von in eine festgeschaltete Verbindung einbezogenen Übertragungseinrichtungen auf komplementäre Arbeitsmodi**

(71) Anmelder: SIEMENS AKTIENGESELLSCHAFT, D-80333 München (DE)
(72) Erfinder: Fischer, Günter, W-8000 München 50 (DE)

(57) **Zusammenfassung**

Bei diesem Verfahren ist vorgesehen, daß die Übertragungseinrichtungen (TAE1, TAE2) bei der Inbetriebnahme jeweils unabhängig abwechselnd in einen der beiden komplementären Arbeitsmodi für ein vorgegebenes Zeitintervall gesteuert und von der jeweiligen Übertragungseinrichtung eine dem jeweiligen Arbeitsmodus entsprechende Startprozedur durch Abgabe wenigstens eines festgelegten Signals eingeleitet wird. Die Dauer des vorgegebenen Zeitintervalls wird dabei mit jedem Wechsel des Arbeitsmodus um einen Zufallswert variiert. Ein Wechsel des Arbeitsmodus für die jeweilige Übertragungseinrichtung findet solange statt, bis die Übertragungseinrichtungen in die beiden komplementären Arbeitsmodi gesteuert und ein diesen entsprechender Signalaustausch erfolgt.

## Beschreibung

Die Erfindung betrifft ein Verfahren zum Einstellen von Übertragungseinrichtungen auf komplementäre Arbeitsmodi gemäß Oberbegriff des Patentanspruches 1.

Übertragungseinrichtungen beispielsweise in Form von Modems, die über eine Fernsprechleitung miteinander verbunden sind, sind im allgemeinen auf komplementäre Arbeitsmodi einzustellen. So ist es beispielsweise unter Verwendung eines sogenannten Getrenntlageverfahrens, bei welchem das Fernsprechband in zwei Kanäle unterteilt ist, erforderlich, festzulegen, welches der beiden Modems in dem oberen Kanal und welches in dem unteren Kanal Signale überträgt. Bei anderen Modulations- und Übertragungsverfahren, die einen automatischen Entzerrer und/oder Echokompensator bedingen, muß sich dieser bzw. müssen sich diese vor Beginn der eigentlichen Datenübertragung auf die Eigenschaften des Übertragungsweges einstellen. Dies erfolgt mit Hilfe einer Handshake-Prozedur, die bei den an einer Verbindung beteiligten Übertragungseinrichtungen unterschiedlich abläuft.

Bei Verbindungen über ein Fernmeldewählnetz erfolgt eine Einstellung der an einer Verbindung beteiligten Übertragungseinrichtungen auf die unterschiedlichen Arbeitsmodi, d. h. auf komplemtäre Arbeitsmodi, zwangsweise im Zuge des jeweiligen Verbindungsaufbaus. Die einer rufenden Teilnehmereinrichtung zugeordnete Übertragungseinrichtung wird in einen ersten Arbeitsmodus ("Call"-Modus), die verbleibende, einer für die jeweilige Verbindung in Frage kommenden gerufenen Teilnehmereinrichtung zugeordnete Übertragungseinrichtung dagegen in einen dazu komplementären Modus ("Answer"-Modus) gesteuert.

Bei festgeschalteten Verbindungen müssen die daran beteiligten Übertragungseinrichtungen in Absprache auf komplementäre Arbeitsmodi eingestellt werden. Dies erfolgt in der Regel durch Einstellen entsprechender Schalter an der jeweiligen Übertragungseinrichtung.

Es ist nun Aufgabe der vorliegenden Erfindung, einen Weg zu zeigen, wie ein Verfahren gemäß Oberbegriff des Patentanspruches 1 ausgebildet werden kann, um die an einer festgeschalteten Verbindung beteiligten Übertragungseinrichtungen automatisch auf komplementäre Arbeitsmodi einstellen zu können.

Gelöst wird diese Aufgabe durch die im Patentanspruch 1 angegebenen Verfahrensmerkmale. Die Erfindung bringt dabei den Vorteil mit sich, daß mit einem relativ geringen Steuerungsaufwand Übertragungseinrichtungen in komplementäre Arbeitsmodi steuerbar sind, ohne daß in Absprache an diesen Übertragungseinrichtungen Einstellungen vorgenommen werden müssen. Dabei ist durch die unabhängige Festlegung der um einen Zufallswert variierenden Dauer der Zeitintervalle, in welchen die an einer Verbindung beteiligten Übertragungseinrichtungen in den einen oder anderen Arbeitsmodus gesteuert sind, sichergestellt, daß die Übertragungseinrichtungen nicht ständig gleichzeitig umgesteuert werden, sondern diese vielmehr in relativ kurzer Zeit auf die komplementären Arbeitsmodi eingestellt werden.

Vorteilhafte Ausgestaltungen der Erfindung ergeben sich aus den Patentansprüchen 2 bis 4.

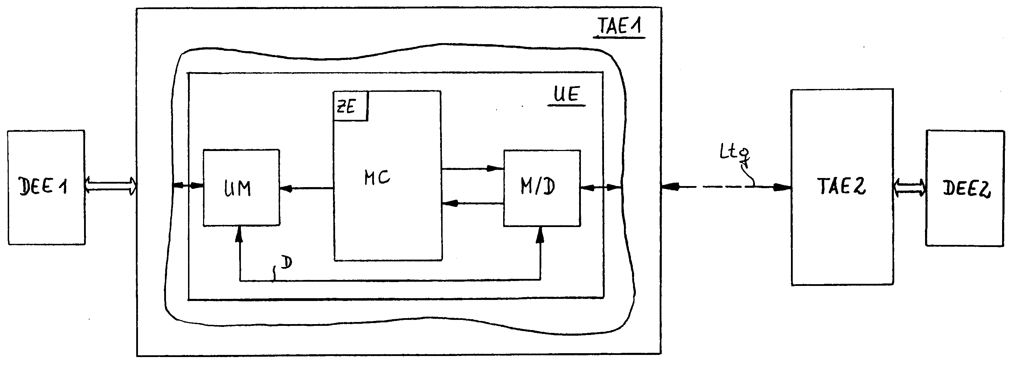

In der Zeichnung sind zwei über eine für eine festgeschaltete Verbindung ausgelegte Leitung Ltg miteinander verbundene Übertragungseinrichtungen in Form von Teilnehmeranschlußeinrichtungen TAE1 und TAE2 dargestellt. An diese ist jeweils eine Datenendeinrichtung DEE1 bzw. DEE2 angeschlossen. Diese mögen beispielsweise im Duplexbetrieb synchrone Datensignale aufnehmen und abgeben. Die Teilnehmeranschlußeinrichtungen dienen dabei dazu, einerseits von der zugehörigen Datenendeinrichtung her aufgenommene Datensignale in über die Leitung Ltg zu übertragende Bitgruppen einzufügen und andererseits in über die Leitung Ltg übertragenen Bitgruppen enthaltene Datensignale an die zugehörige Datenendeinrichtung weiterzuleiten. Die Übertragung der Bitgruppen über diese Leitung möge dabei durch Modulation eines Trägers erfolgen, wobei die modulierten Signale im Fernsprechband auftreten mögen.

Die von der Teilnehmeranschlußeinrichtung TAE1 bzw. TAE2 gebildeten bzw. aufgelösten Bitgruppen, die auch als Envelopes bezeichnet werden, mögen in bekannter Weise aus einer festgelegten Anzahl von Datenbits, beispielsweise 8 Datenbits, sowie zwei Zusatzbits, nämlich einem sogenannten Alignment-Bit und einem sogenannten Status-Bit, gebildet sein. Durch diese Zusatzbits ist bei dem angegebenen Beispiel die Übertragungsbitrate der Envelopes um 25 % gegenüber der Übertragungsbitrate der von der zugehörigen Datenendeinrichtung abgegebenen bzw. aufgenommenen Datenbits erhöht. Aus einer Übertragungsbitrate der von einer der Datenendeinrichtungen DEE2 und DEE2 abgegebenen Datensignale von 4,8 kbit/s resultiert also durch die Bildung der Envelopes eine Übertragungsbitrate von 6 kbit/s.

Die aus der Envelope-Bildung resultierende Übertragungsbitrate weicht von den für eine Übertragung mit einem modulierten Träger standardisierten Übertragungsbitraten ab. Eine derartige standardisierte Übertragungsbitrate ist beispielsweise 7,2 kbit/s.

Vor der Bildung von modulierten Signalen aus den Envelopes ist also bei dem angenommenen Beispiel eine Bitratenumsetzung von 6 kbit/s auf 7,2 kbit/s vorzunehmen. In entsprechender Weise sind die aus den über die Leitung Ltg übertragenen modulierten Signalen durch Demodulation gewonnenen Envelopes, die zunächst mit einer Bitrate von 7,2 kbit/s auftreten, auf eine Bitrate von 6 kbit/s umzusetzen. Für diese Funktionen ist in jeder der Teilnehmeranschlußeinrichtungen TAE1 und TAE2 eine gesonderte Übertragungseinrichtung UE vorgesehen. Der prinzipielle Aufbau einer solchen Übertragungseinrichtung ist in der Zeichnung am Beispiel der Teilnehmeranschlußeinrichtung TAE1 dargestellt. Danach ist in der Übertragungseinrichtung in Richtung zu der Datenendeinrichtung (DEE1 bzw. DEE2) hin eine Bitraten-Umsetzungseinrichtung UM, in Richtung zu der Leitung Ltg dagegen eine Modulations-/Demodulations-Einrichtung M/D vorgesehen. Diese Einrichtungen stehen einerseits über eine der Übertragung der Envelopes dienende Datenleitung D miteinander und andererseits über Steuerleitungen mit einer Steuereinrichtung MC in Verbindung. Diese Steuereinrichtung, die beispielsweise als Mikrocontroller unter Verwendung des Mikroprozessors SAB 8051 der Siemens AG ausgebildet sein möge, dient dabei für die Steuerung der Bitraten-Umsetzeinrichtung UM und der Modulations-/Demodulations-Einrichtung M/D. Insbesondere wird durch die Steuereinrichtung MC der Arbeitsmodus für die Modulations-/Demodulations-Einrichtung M/D festgelegt. Dabei sind die Modulations-/Demodulations-Einrichtungen in den beiden Teilnehmeranschlußeinrichtungen TAE1 und TAE2 auf komplementäre Arbeitsmodi einzustellen. Beispielsweise sind diese bei Realisierung der CCITT-Empfehlung V. 32 mit "Call"-Modus und "Answer"-Modus bzeichnet. Bei einer festgeschalteten Verbindung zwischen den genannten Teilnehmeranschlußeinrichtungen sind für die komplementären Arbeitsmodi Startprozeduren festgelegt, die ebenfalls in der genannten CCITT-Empfehlung definiert sind.

Die vorliegende Erfindung betrifft nun die automatische Einstellung der beiden Teilnehmeranschlußeinrichtungen TAE1 und TAE2, insbesondere der diesen zugehörigen Übertragungseinrichtungen (UE), auf die komplementären Arbeitsmodi ("Call"-Modus, "Answer"-Modus). Dafür werden die Modulations-/Demodulations-Einrichtungen M/D der beiden Übertragungseinrichtungen UE bei der Inbetriebnahme unabhängig voneinander abwechselnd für ein vorgegebenes Zeitintervall auf ein von der zugehörigen Steuereinrichtung MC abgegebenes Steuersignal hin in den einen oder anderen Arbeitsmodus gesteuert. Dabei wird die für den jeweiligen Arbeitsmodus in Frage kommende Startprozedur aktiviert, in welcher festgelegte Signale in modulierter Form an die Leitung Ltg abgegeben werden und das Auftreten von in Gegenrichtung übertragenen festgelegten modulierten Signalen überwacht wird. Dabei kommen die in den beiden Modulations-/Demodulations-Einrichtungen M/D aktivierten Startprozeduren nur dann vollständig zum Ablauf, wenn die Startprozeduren komplementär zueinander sind, d. h. wenn die beiden Übertragungseinrichtungen durch die zugehörigen Steuereinrichtungen MC in komplementäre Arbeitsmodi gesteuert sind. Ist dies der Fall, so erhalten die Steuereinrichtungen jeweils von ihrer zugehörigen Modulations-/Demodulations-Einrichtung entsprechende Steuersignale zugeführt. Auf diese Steuersignale hin wird dann der gerade eingestellte Arbeitsmodus beibehalten und die Datensignalübertragung in der oben angegebenen Weise freigegeben.

Kommen dagegen die in den Modulations-/Demodulations-Einrichtungen aktivierten Startprozeduren nicht zu einem vollständigen Ablauf, so wird die jeweilige Modulations-/Demodulations-Einrichtung nach dem vorgegebenen Zeitintervall durch die zugehörige Steuereinrichtung in den jeweils anderen Arbeitsmodus gesteuert. Damit nun die beiden Modulations-/Demodulations-Einrichtungen nicht ständig gleichzeitig umgesteuert werden und damit ggf. eine Einstellung auf komplementäre Arbeitsmodi ausbleibt, ist vorgesehen, daß durch die in den beiden Übertragungseinrichtungen vorhandenen Steuereinrichtungen jeweils unabhängig voneinander mit jedem Wechseln des Arbeitsmodus das vorgegebene Zeitintervall um einen Zufallswert variiert wird. Als Zeitsignalgeber wird dabei eine der jeweiligen Steuereinrichtung MC zugehörige bzw. zugeordnete Zähleinrichtung ZE benutzt, welche durch von einem Taktgenerator abgegebene Taktimpulse gesteuert und hinsichtlich ihrer Zählperiode voreinstellbar ist. Dafür wird bei dem vorliegenden Ausführungsbeispiel ein festgelegter konstanter Zeitwert herangezogen, zu welchem der genannte variable Zufallswert addiert wird. Abgeleitet wird dieser Zufallswert beispielsweise durch interne Zählregisterstände des Taktgenerators. Eine weitere Möglichkeit besteht in der Verwendung eines zusätzlichen Taktgenerators, welcher mit einer gegenüber der Taktfrequenz des genannten Taktgenerators höheren Taktfrequenz getaktet wird.

Unabhängig von der Art der Bereitstellung des variablen Zusatzwertes wird bei dem vorliegenden Ausführungsbeispiel in Abhängigkeit vom logischen Pegel eines festgelegten Bits eines gerade bereitgestellten Zusatzwertes, beispielsweise des niederwertigsten Bits, dieser Zufallswert vorzeichenbehaftet zu dem festgelegten konstanten Zeitwert addiert. So wird beispielsweise bei einem logischen Pegel "0" des betreffenden Bits der gerade bereitgestellte Zufallswert als positiver Wert, bei einem logischen Pegel "1" dagegen als negativer Wert zu dem konstanten Zeitwert addiert.

Vorstehend wurde die vorliegende Erfindung am Beispiel zweier in eine festgeschaltete Verbindung einbezogener Teilnehmeranschlußeinrichtungen TAE1 und TAE2 beschrieben, zwischen welchen modulierte Signale ausgetauscht werden. Die Erfindung ist jedoch nicht auf eine derartige Anwendung beschränkt. Vielmehr ist sie immer dann anwendbar, wenn in eine festgeschaltete Verbindung einbezogene Übertragungseinrichtungen auf zwei für eine Kommunikation erforderliche komplementäre Arbeitsmodi einzustellen sind.

## Patentansprüche

1. Verfahren zum Einstellen von in eine festgeschaltete Verbindung einbezogenen Übertragungseinrichtungen (UE), insbesondere Datenübertragungseinrichtungen, auf zwei, für eine Kommunikation erforderliche komplementäre Arbeitsmodi,
**dadurch gekennzeichnet**,
daß die Übertragungseinrichtungen (UE) bei der Inbetriebnahme jeweils unabhängig abwechselnd in einen der beiden komplementären Arbeitsmodi für ein vorgegebenes Zeitintervall gesteuert und von der jeweiligen Übertragungseinrichtung eine dem jeweiligen Arbeitsmodus entsprechende Startprozedur durch Abgabe wenigstens eines festgelegten Signals eingeleitet wird,
daß die Dauer des vorgegebenen Zeitintervalls mit jedem Wechsel des Arbeitsmodus um einen Zufallswert variiert wird
und daß für die jeweilige Übertragungseinrichtung der Arbeitsmodus solange gewechselt wird, bis die Übertragungseinrichtungen in die beiden komplementären Arbeitsmodi gesteuert und ein diesen entsprechender Signalaustausch erfolgt.

2. Verfahren nach Anspruch 1,
**dadurch gekennzeichnet**,
daß das jeweilige Zeitintervall durch einen konstanten Zeitwert sowie einen zu diesem addierten, innerhalb eines vorgegebenen Wertebereiches variablen Zufallswert festgelegt wird.

3. Verfahren nach Anspruch 2,
**dadurch gekennzeichnet**,
daß das jeweilige Zeitintervall durch eine nach Maßgabe des konstanten Zeitwertes und des Zufallswertes voreingestellte Binärzähleinrichtung (ZE) festgelegt wird.

4. Verfahren nach Anspruch 3,
**dadurch gekennzeichnet**,
daß in Abhängigkeit von dem logischen Pegel des niederwertigsten Bits des Zufallswertes dieser vorzeichenbehaftet zu dem konstanten Zeitwert addiert wird.
